# EUROPÄISCHE PATENTSCHRIFT

(11) **EP 2 075 107 B1**
(45) Veröffentlichungstag und Bekanntmachung des Hinweises auf die Patenterteilung: **06.01.2010**
(21) Anmeldenummer: 08075965.7
(22) Anmeldetag: 23.12.2008
(51) Int. Cl.: B29B 17/00

(54) **Verfahren und Vorrichtung zur Aufbereitung von Kunststoffabfällen**
Method and device for treating plastic waste
Procédé et dispositif destinés à la préparation de déchets en plastique

(30) Priorität: 27.12.2007 DE 102007063510
(43) Veröffentlichungstag der Anmeldung: 01.07.2009
(73) Patentinhaber: MTM Plastics GmbH, 99759 Niedergebra (DE)
(72) Erfinder: Peters, Tobias, 37339 Gernrode (DE); Böttner, Ralf, 99706 Sondershausen (DE)
(74) Vertreter: Bröseke, Eribert

(56) Entgegenhaltungen:
- EP-A- 1 747 870
- WO-A-00/76681
- US-A- 5 277 758
- US-A1- 2005 274 651

## Beschreibung

Die Erfindung betrifft ein Verfahren und eine Vorrichtung zur Rückgewinnung von Fraktionen spezieller Kunststoffe, vorzugsweise Polyolefine aus den anfallenden Kunststoffabfällen durch Dichtetrennung in Flüssigkeiten. Eine solche Vorrichtung ist im Dokument US 2005/0274651A1 offenbart.

Es sind die verschiedensten Methoden der Kunststoffrückgewinnung aus kunststoffreichen Abprodukten, wie Verpackung, Folien, Verbundstoffen, Hohlkörpern bekannt. Als beste Rückgewinnungsmethode spezieller Fraktionen aus den Kunststoffgemischen hat sich bisher die Dichtetrennung in Flüssigkeiten in so genannten 3-Phasen-Zentrifugen erwiesen.

Zur Vorbereitung des anfallenden Abproduktes wird dieses zerkleinert, anschließend mehr oder weniger von anhaftendem Schmutz und Metallteilen befreit, mit dem Trennmedium vermischt und dann der eigentlichen Trennung zugeführt.

Bei der Abtrennung von Polyolefinen aus den anfallenden Kunststoffgemisch wird mit Wasser als Trennmittel gearbeitet. Dabei werden die Polyolefine mit einer Dichte < 1 als Schwimmfraktion, die anderen Kunststoffe und Sonstiges als Sinkfraktion und das Trennmittel als dritte Fraktion erhalten. Das Trennmittel wird im Kreislauf zurückgeleitet.

Es ist verständlich, dass das vorbehandelte anfallende Kunststoffmaterial nicht eine einheitliche Qualität aufweist. Noch anhaftende Schmutzpartikel und ähnliches erschweren eine saubere Dichtetrennung, vermindern die Ausbeute.

Der Erfindung liegt die Aufgabe zugrunde, das vorbehandelte Kunststoffmaterial vor dem Einleiten in die 3-Phasen-Zentrifuge so vorzubereiten, dass eine gleichmäßige dauerhafte Materialzuführung bei maximalem Durchsatz und gleich bleibendem Trennergebnis erreicht wird.

Die Aufgabe der Erfindung wird verfahrensgemäß durch die kennzeichnenden Merkmale des Anspruchs 1 und vorrichtungsgemäß durch die Merkmale des Anspruchs 3 gelöst. Besondere Ausgestaltungen des erfindungsgemäßen Verfahrens bzw. der erfindungsgemäßen Vorrichtung sind in den Unteransprüchen angegeben.

Erfindungsgemäß werden die weitgehend gereinigten Kunststoffteilchen, die eine Größe von 1 bis 120 mm aufweisen, in einem Dosierbehälter zur Vergleichmäßigung des Schredderaustrages vermischt.

Im Dosierbehälter werden die Kunststoffteilchen durch Rührer homogenisiert. Dabei werden durch das Rührwerk z. B. größere Kunststoffteile noch zerkleinert und insbesondere Tonbänder und andere lange Teile festgehalten und durch die Austragschnecken zerrissen und damit eine Verstopfung der Austragschnecken in den Schneckenrohren verhindert. Bei der intensiven Vermischung und der Homogenisierung der Kunststoffteilchen aus dem Schredderer werden noch anhaftende Schmutzteilchen vom Schreddermaterial gelöst, was der nachfolgenden optimalen Trennung der unterschiedlichen Kunststoffsorten zugute kommt. Der Dosierbehälter hat im Bereich der Austragschnecken eine rechteckige oder quadratische Form, die sich nach oben pyramidenförmig verjüngt. Durch die gewählte Behälterform werden Brückenbildung und Verstopfungen durch die Kunststoffteilchen vermieden. Die Neigung der Wandungen liegt zwischen 5 bis 30°. Die zu homogenisierenden Kunststoffteilchen werden vom Schredderer dem Dosierbehälter durch mechanische Förderer zugeführt. Damit es nicht zu einem Überlaufen des Behälterinhaltes, z. B. durch Ausfall einer Austragschnecke oder aber durch Störung im Zulauf es zu einem größeren Absinken des Füllstandes kommt, ist am oberen Ende des Dosierbehälters ein Messsystem installiert, das einen entsprechenden Regelkreis ansteuert, der für eine kleinere bzw. größere Einlaufmenge der zu homogenisierenden Kunststoffmischung sorgt, damit im Dosierbehälter ein gleich bleibender Füllstand gegeben ist.

Vom Dosierbehälter werden mehrere Nachzerkleinerer mit dem geschredderten und homogenisierten Kunststoffabfall versorgt. Dazu sind am unteren Ende des Dosierbehälters mehrere Austragschnecken nebeneinander angeordnet, wobei jeder Nachzerkleinerer durch eine gesonderte Austragschnecke versorgt wird. Das hat den Vorteil, dass bei einem Ausfall eines Nachzerkleinerers die anderen Nachzerkleinerer ohne Beeinflussung weiter optimal arbeiten.

Zur Überwachung des Materialflusses ist ein Sichtfenster in einer Wandung des Dosierbehälters vorgesehen. Bei einer Verstopfung in einer Austragschnecke wird die entsprechende Kontrollöffnung zerstörungsfrei angehoben und dabei ein Sicherheitskontakt ausgelöst, der die entsprechende Austragschnecke stoppt und gegen Wiederanlauf sichert. Jede Austragschnecke ist über einen am unteren Ende außerhalb des Dosierbehälters vorgesehenen Motor in ihrer Drehgeschwindigkeit entsprechend der gewünschten Austragmenge zu einem nachfolgenden Nachzerkleinerer einstellbar. Dazu sind in den Zuführungsrohren zu den Nachzerkleinern Messstellen vorgesehen, die über regelbare Sensoren den jeweiligen Motor der Austragschnecke beeinflussen, damit die gewünschte Austragsmenge für die Zerkleinerung bereitsteht.

Für eine gute Materialführung und um einer Verstopfung der Austragschnecken im Schneckenrohr vorzubeugen, sind im Boden des Dosierbehälters die Konturen der Schneckengänge zu 30 bis 70 %, vorzugsweise zu 40 bis 60 % und insbesondere zu 50 % nachgebildet. Die Austragschnecken, die an der Austragseite der zu trennenden Mischung im Schneckenrohr über den Dosierbehälter hinausragen, weisen in Förderrichtung eine zunehmende Schneckensteigung auf. Auch damit wird einer Verstopfung der Schneckengänge vorgebeugt. Die Schneckensteigung auf den Austragschnecken kann kontinuierlich oder abschnittsweise erhöht werden. Auf der Austragseite sind die Austragschnecken ohne Gegenlager. Zur Führung der Schnecken sind vorzugsweise vier einstellbare Gleitelemente aus hochverschleißfesten Kunststoffen in jedem Schneckenrohr angeordnet. Die Gleitelemente lassen sich bei Bedarf schnell austauschen. Sie unterstützen den Materialtransport durch das Schneckenrohr und beugen ebenfalls Verstopfungen vor. Der Boden des Dosierbehälters mit den Konturen der Schneckengänge besteht aus einem hochverschleißfesten Hardox 400-Stahl o ä.

Nach dem Austrag aus dem Dosierbehälter mittels der Austragschnecken wird die homogene Mischung der Kunststoffteilchen kontinuierlich über Saugleitungen der jeweiligen Nachzerkleinerung zugeführt. Am unteren Ende der jeweiligen Saugleitungen ist ein Einleitungsrohr für Nebenluft vorgesehen. Durch die nachträgliche Nebenluftzuführung wird zwischen dem Dosierbehälter und den nachfolgenden Nachzerkleinerern für eine ausreichende Strömungsgeschwindigkeit gesorgt. Die Nebenluftzuführung trägt weiterhin dazu bei, dass es nicht zu Verstopfungen im Schneckenrohr und den Saugleitungen kommt.

Die homogenisierte Kunststoffmischung wird mit einem Durchsatz von 0,6 bis 1,5 t/h den Nachzerkleinerern zugeführt. Die Nebenluftzuführung ermöglicht es auch, dass jedem Nachzerkleinerer unabhängig von den anderen Nachzerkleinerern in ihrem Abscheidegrad der Leichtfraktion von dem Schwergut eingestellt werden kann.

Mit dem erfindungsgemäßen Verfahren wird es möglich, in einem Arbeitsschritt die Materialdurchmischung, Pufferung, Verteilung, Dosierung und Schwergutsichtung zu erreichen.

Die Erfindung soll nachfolgend anhand der Zeichnungen näher erläutert werden. Es zeigen:
- Fig. 1: den Dosierbehälter im Querschnitt;
- Fig. 2: den Dosierbehälter von oben;

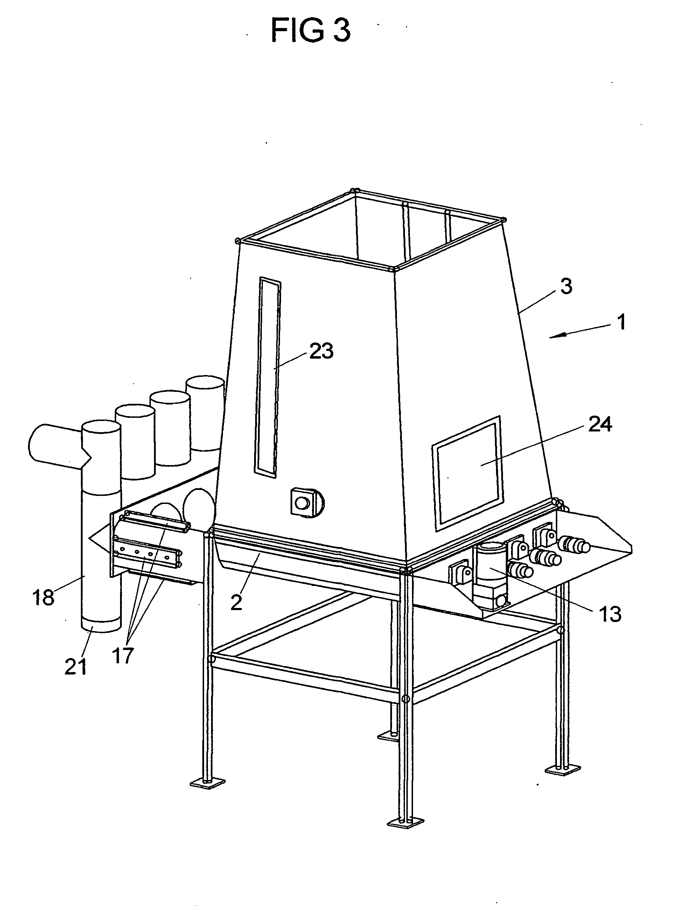

- Fig. 3: den Dosierbehälter in einer Seitenansicht.

Der Dosierbehälter 1 besteht aus einem rechteckigen oder quadratischen Unterteil 2 mit geraden Seitenflächen und einem sich nach oben pyramidal verjüngenden Oberteil 3. Kurz unterhalb des oberen Randes des Dosierbehälters 1 ist ein Messsystem 4 vorgesehen, das über einen Regelkreis für einen annähernd konstanten Füllstand im Dosierbehälter 1 sorgt. Das vorgereinigte geschredderte Kunststoffmaterial wird über eine mechanische Förderung 5 in den Dosierbehälter 1 eingeführt. Für eine homogene Vermischung des ungleichmäßigen Schredderzugangs sorgt eine im unteren Teil des Oberteils 3 des Dosierbehälters 1 angeordnete Rührwelle 6 mit einem oder mehreren Rührpropellern 7 mit vier Rührblättern 8.

Neben der Aufbereitung zu einer homogenen Mischung der geschredderten Kunststoffteilchen dienen die Rührpropeller zum Festhalten längerer Kunststoffteile, wie Tonbänder, bei ihrem Austrag durch die Austragschnecken 10, wobei sie zerreißen und nicht zu Verstopfungen der Schneckenrohre führen. Die Rührwelle 6 wird durch einen Motor 9 mit der gewünschten Drehzahl, Drehrichtung und Taktung bewegt.

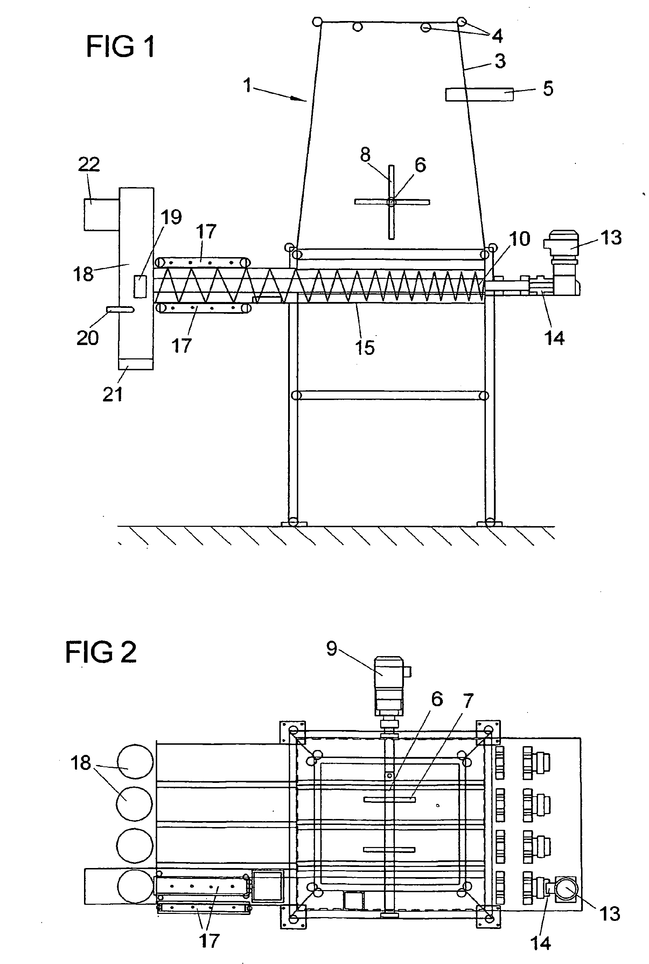

Der Austrag der homogenen Mischung zu den Nachzerkleinerern erfolgt durch Austragschnecken 10, von denen mehrere nebeneinander angeordnet sind und die jeweils nur einen Nachzerkleinerer bedienen. In Figur 1 wird eine solche Austragschnecke 10 näher dargestellt, wobei alle anderen Austragschnecken 10 ebenso aufgebaut sind. Die Austragschnecken 10 sind nur am hinteren Ende in einem Lager 11 vor dem Antriebsmotor 12 mit Kupplung 13 fest gelagert. Am Austragsende ist kein Lager vorgesehen, um weitgehend Verstopfungen im Schneckenrohr 16 zu vermeiden. Die Führung der Austragschnecken 10 an der Austrittsseite übernehmen mindestens zwei vorzugsweise vier Gleitelemente 17 aus verschließfestem Kunststoff, die im Schneckenrohr 6 mit gleichem Abstand voneinander angeordnet sind. Die Gleitelemente 17 sind leicht auswechselbar und einstellbar. Je nach Menge und Größe der Kunststoffteile können die Gleitelemente mehr oder weniger in das Schneckenrohr 16 hineinragen. Es ist damit eine Möglichkeit gegeben, den Materialtransport zu beeinflussen.

Der Boden des Dosierbehälters wird durch nebeneinander angeordnete Tröge 15 aus verschleißfestem Material gebildet. In den Trögen 15, die innerhalb des Dosierbehälters 1 den jeweiligen Schneckenboden bilden, sind die Konturen der Austragschnecke 10 teilweise nachgebildet.

Wie weiter aus Figur 1 ersichtlich, nimmt die Schneckensteigung in Förderrichtung zu. Das kann wie gezeigt abschnittsweise aber auch kontinuierlich erfolgen. Die Schneckensteigung soll ebenfalls einer Verstopfung der Schneckengänge entgegen wirken.

Die aus den Schneckenrohren 16 austretende homogene Mischung wird über kurze aufsteigende Rohre 18 einem horizontalen Abzweig mit Drosselklappe 22 und weiter den nicht gezeigten Nachzerkleinerern zugeführt. Die Drosselklappen 22 sorgen für eine Vergleichmäßigung der Strömung der Kunststoffteilchen und für die ausreichende Strömungsgeschwindigkeit.

Die mit dem im Wesentlichen sauberen Schreddergut noch eingeschteusten Störstoffe, wie Steine, Glas, Papier u. ä., fallen entgegen dem Luftstrom nach unten durch das Steigrohr 18.

Zur Kontrolle des zu homogenisierenden Schreddermaterialzulaufs ist an einer Seite des Dosierbehälters 1 ein längliches Sichtfenster 23 vorgesehen, das eine visuelle Kontrolle des Behälterinhaltes erlaubt. Auf der Seite der Antriebsmotoren für die Austragschnecken ist eine Reinigungsklappe vorgesehen. Sollte es zu einer Verstopfung im Dosierbehälter kommen, so könnte nach Öffnung dieser Reinigungsklappe 24 die Verstopfung schnell beseitigt werden.

In Förderrichtung der Schnecken 15 ist in den Steigrohren 18 je eine Klappe 19 mit Sichtfenster angebracht. Die Klappe 19 wird durch einen Sicherheitsschalter überwacht, der den Antriebsmotor der jeweiligen Schnecke 10 beim Öffnen der Klappe 19 stoppt und gegen ein Wiederanlaufen sichert. Die Klappe 19 ist so ausgeführt, dass ein leichter Druck von innen diese anhebt und damit der Sicherheitsschalter die Schnecke 10 stoppt. So wird einer entstehenden Verstopfung im Übergang zwischen Schneckenrohr 16 und Steigrohr 18 rechtzeitig erkannt und kann über die Klappe 19 gefahrlos beseitigt werden.

## Patentansprüche

1. Verfahren zur Aufbereitung von geschredderten Kunststoffabfällen für die Trennung in 3-Phasen-Zentrifugen,
**dadurch gekennzeichnet,**
**dass** die geschredderten, im Wesentlichen von anhaftenden Verunreinigungen befreiten Kunststoffteilchen für mehrere Nachzerkleinerer in einem gemeinsamen Dosierbehälter homogen vermischt und den Nachzerkleinerer mit jeweils einer, einem Nachzerkleinerer zugeordneten Austragsvorrichtung über getrennte Leitungen zugeführt werden.

2. Verfahren nach Anspruch 1, **dadurch gekennzeichnet, dass** als Austragsvorrichtung eine Austragschnecke (10) eingesetzt wird.

3. Vorrichtung zur Homogenisierung von geschredderten Kunststoffabfällen für die Trennung in 3-Phasen-Zentrifugen, mit einem Dosierbehälter (1) bestehend aus einem Unterteil (2) mit senkrechten Seitenteilen und einem sich nach oben pyramidal verjüngenden Oberteil (3), bei dem im unteren Teil des Oberteiles (3) eine durch einen Motor (9) angetriebene Rührwelle (6) mit einem oder mehreren Rührpropellern (7) vorgesehen ist, die für eine homogene Mischung und Vergleichmäßigung des Schreddergutes sorgt, dass im Unterteil (2) des Dosierbehälters (1) mehrere nebeneinander angeordnete Austragschnecken (10) angeordnet sind, die über jeweils separate Rohre (18) das zu trennende Material den Nachzerkleinerern zuführen, und dass für die Zuführung von Nebenluft Düsen (20) in den Rohren (18) angeordnet sind.

4. Vorrichtung nach Anspruch 3, **dadurch gekennzeichnet, dass** jeder Rührpropeller (7) vorzugsweise vier Rührblätter (8) aufweist.

5. Vorrichtung nach Anspruch 3 und 4, **dadurch gekennzeichnet, dass** jede der Austragschnecken (10) einen separaten Motor (13) mit Kupplung (14) aufweist.

6. Vorrichtung nach Anspruch 3 und 5, **dadurch gekennzeichnet, dass** die Austragschnecken (10) in Förderrichtung eine zunehmende Schneckensteigung aufweisen.

7. Vorrichtung nach mindestens einem der Ansprüche 3 bis 6, **dadurch gekennzeichnet, dass** die Schneckensteigung bei den Austragschnecken (10) kontinuierlich erfolgt.

8. Vorrichtung nach mindestens einem der Ansprüche 3 bis 6, **dadurch gekennzeichnet, dass** die Änderung der Schneckensteigung bei den Austragschnecken (10) abschnittsweise erfolgt.

9. Vorrichtung nach mindestens einem der Ansprüche 3 bis 8, **dadurch gekennzeichnet, dass** zur Führung der Austragschnecken (10) an der Austragseite im Schneckenrohr (16) Gleitelemente (17) vorgesehen sind.

10. Vorrichtung nach mindestens einem der Ansprüche 3 bis 9, **dadurch gekennzeichnet, dass** die Gleitelemente (17) aus hoch verschleißfestem Material, vorzugsweise Kunststoff, bestehen.

11. Vorrichtung nach mindestens einem der Ansprüche 3 bis 10, **dadurch gekennzeichnet, dass** zwei oder mehr Gleitelemente (17) je Schneckenrohr (16) vorgesehen sind.

12. Vorrichtung nach mindestens einem der Ansprüche 3 bis 11, **gekennzeichnet durch** als nebeneinander angeordnete Tröge (15) ausgestaltetem Boden aus verschleißfestem Material im Dosierbehälter (1).

13. Vorrichtung nach mindestens einem der Ansprüche 3 bis 12, **dadurch gekennzeichnet, dass** in den Trögen (15) die Konturen der Schneckengänge der Austragschnecken (10) teilweise nachgebildet sind.

14. Vorrichtung nach Anspruch 13, **dadurch gekennzeichnet, dass** die Konturen der Schneckengänge der Austragschnecken (10) in den Trögen (15) zu 30 bis 70%, vorzugsweise 40 bis 60 % und insbesondere zu 50 % nachgebildet sind.

15. Vorrichtung nach mindestens einem der Ansprüche 3 bis 14, **dadurch gekennzeichnet, dass** die Neigung des Oberteiles (3) des Dosierbehälters (1) zwischen 5 und 30° beträgt.

16. Vorrichtung nach mindestens einem der Ansprüche 3 bis 15, **dadurch gekennzeichnet, dass** für einen annähernd konstanten Füllstand im Dosierbehälter (1) ein am oberen Ende des Oberteiles 3 des Dosierbehälters (1) angeordnetes Messsystem (4) sorgt.

## Claims

1. Method for processing shredded plastic waste for the separation in three-face centrifuges,
**characterised in that**,
the shredded plastic particles essentially released from adhesive contaminants are homogeneously mixed in a common dosing container for several macerators and are guided to the macerator with a respective delivery device assigned to a macerator over separate pipelines.

2. Method according to claim 1, **characterised in that**, a delivery screw (10) is used as delivery device.

3. Device for homogenizing shredded plastic waste for the separation in three-phase centrifuges with a dosing container (1) consisting of a bottom part (2) with vertical side parts and an upper part (3) tapering upwards pyramidal, in which in the lower part of the upper part (3) a stirrer shaft (6) with one or several stirrer propellers (7) powered by an engine (9) is provided, which provides for a homogenous mixing and uniformity of the shredded material, wherein in the bottom part (2) of the dosage container (1) multiple delivery screws (10) are arranged adjacent to each other, which guide the material to be separated over respective separate pipelines (18) to the macerator, and wherein nozzles (20) for feeding air are arranged in the pipelines (18).

4. Device according to claim 3, **characterised in that**, each stirrer propeller (7) has preferably four stirrer blades (8).

5. Device according to claim 3 or 4, **characterised in that**, each of the delivery screws (10) has a separate engine (13) with a clutch (14).

6. Device according to claim 3 and 5, **characterised in that**, the delivery screws (10) have an increasing screw gradient in the direction of conveyance.

7. Device according to at least one of the claims 3 to 6, **characterised in that**, the screw gradient in the delivery screws (10) occurs continuously.

8. Device according to at least one of the claims 3 to 6, **characterised in that**, the screw gradient in the delivery screws (10) occurs in sections.

9. Device according to at least one of the claims 3 to 8, **characterised in that**, sliding elements (17) are provided on the discharge side in the screw pipe (16) for guiding the delivery screws (10).

10. Device according to at least one of the claims 3 to 9, **characterised in that**, the sliding elements (17) consist of highly wear resistant material, preferably plastics.

11. Device according to at least one of the claims 3 to 10, **characterised in that**, two or more sliding elements (17) are provided for each screw pipe (16).

12. Device according to at least one of the claims 3 to 11, **characterised by** a bottom of wear resistant material in the dosing container (1) designed as troughs (15) arranged adjacent to each other.

13. Device according to at least one of the claims 3 to 12, **characterised in that**, the outlines of the screw channels of the delivery screws (10) are partially reproduced in the troughs (15).

14. Device according to claim 13, **characterised in that**, the outlines of the screw channels of the delivery screws (10) are reproduced for 30 to 70 %, preferably for 40 to 60 % and in particular for 50% in the troughs (15).

15. Device according to at least one of the claims 3 to 14, **characterised in that**, the incline of the upper part (3) of the dosing container (1) is between 5 and 30°.

16. Device according to at least one of the claims 3 to 15, **characterised in that**, a measuring system (4) arranged on the upper end of the upper part (3) of the dosing container (1) provides an approximately constant filling level in the dosage container (1).

## Revendications

1. Procédé destiné à la préparation de déchets en plastique broyés pour la séparation dans des centrifugeuses à trois phases,
**caractérisé en ce**
**que** les particules de plastique broyées, libérées essentiellement des impuretés adhérentes pour plusieurs broyeurs secondaires sont mélangées de manière homogène dans une cuve de dosage commune et sont amenées au broyeur secondaire avec respectivement un dispositif de déversement associé au broyeur secondaire via des conduites séparées.

2. Procédé selon la revendication 1, **caractérisé en ce qu'**une vis de décharge (10) est utilisée comme dispositif de déversement.

3. Dispositif destiné à l'homogénéisation de déchets en plastique broyés pour la séparation dans des centrifugeuses à trois phases avec une cuve de dosage (1) se composant d'un élément inférieur (2) avec des éléments latéraux verticaux et d'un élément supérieur (3) se rétrécissant vers le haut de manière pyramidale, pour lequel dans la partie inférieure de l'élément supérieur (3) est prévu un mélangeur (6) entraîné par un moteur (9) avec un ou plusieurs agitateurs à hélice (7) qui veille à un mélange homogène et à une uniformisation du produit broyé, en ce que dans l'élément inférieur (2) de la cuve de dosage (1) sont disposées plusieurs vis de décharge (10) disposées les unes à côté des autres qui amènent via des tubes (18) respectivement séparés, le matériau à séparer aux broyeurs secondaires et en ce que des buses (20) sont disposées dans les tubes (18) pour l'amenée d'air supplémentaire.

4. Dispositif selon la revendication 3, **caractérisé en ce que** chaque agitateur à hélice (7) présente de préférence quatre palettes d'agitation (8).

5. Dispositif selon les revendications 3 et 4, **caractérisé en ce que** chacune des vis de décharge (10) présente un moteur séparé (13) avec couplage (14).

6. Dispositif selon les revendications 3 et 5, **caractérisé en ce que** les vis de décharge (10) présentent dans le sens de transport un pas de vis croissant.

7. Dispositif selon au moins l'une quelconque des revendications 3 à 6, **caractérisé en ce que** le pas de vis pour les vis de décharge (10) est continu.

8. Dispositif selon au moins l'une quelconque des revendications 3 à 6, **caractérisé en ce que** la modification du pas de vis pour les vis de décharge (10) est effectuée par endroits.

9. Dispositif selon au moins l'une quelconque des revendications 3 à 8, **caractérisé en ce que** des éléments coulissants (17) sont prévus pour l'amenée des vis de décharge (10) sur le côté de décharge dans le tube hélicoïdal (16).

10. Dispositif selon au moins l'une quelconque des revendications 3 à 9, **caractérisé en ce que** les éléments coulissants (17) se composent de matériau très résistant à l'usure, de préférence de matière plastique.

11. Dispositif selon au moins l'une quelconque des revendications 3 à 10, **caractérisé en ce que** deux ou plus éléments coulissants (17) sont prévus par tube hélicoïdal (16).

12. Dispositif selon au moins l'une quelconque des revendications 3 à 11, **caractérisé par** un fond conçu sous la forme de bacs (15) disposés les uns à côté des autres en matériau résistant à l'usure dans la cuve de dosage (1).

13. Dispositif selon au moins l'une quelconque des revendications 3 à 12, **caractérisé en ce que** les contours des pas des vis de décharge (10) sont reproduits en partie dans les bacs (15).

14. Dispositif selon la revendication 13, **caractérisé en ce que** les contours des pas des vis de décharge (10) sont reproduits dans les bacs (15) de 30 à 70 %, de préférence de 40 à 60 % et en particulier à 50 %.

15. Dispositif selon au moins l'une quelconque des revendications 3 à 14, **caractérisé en ce que** l'inclinaison de l'élément supérieur (3) de la cuve de dosage (1) est comprise entre 5 et 30 °.

16. Dispositif selon au moins l'une quelconque des revendications 3 à 15, **caractérisé en ce qu'**un système de mesure (4) disposé sur l'extrémité supérieure de l'élément supérieur (3) de la cuve de dosage (1) veille à un niveau approximativement constant dans la cuve de dosage (1).
